# EUROPEAN PATENT SPECIFICATION

(11) **EP 1 887 741 B1**
(45) Date of publication and mention of the grant of the patent: **17.03.2010**
(21) Application number: 06118695.3
(22) Date of filing: 09.08.2006
(51) Int. Cl.: H04L 12/56

(54) **Apparatus for controlling data packet flow**
Anordnung zur Flußsteuerung von Datenpaketen
Dispositif de contrôle de flux de paquets de données

(43) Date of publication of application: 13.02.2008
(73) Proprietor: Hitachi Ltd., Tokyo (JP)
(72) Inventor: Wakayama, Koji, Kanagawa 229-0032 (JP)
(74) Representative: Piotrowicz, Pawel Jan Andrzej

(56) References cited:
- EP-A- 1 119 142
- WO-A-99/57825
- US-A1- 2003 002 438
- US-A1- 2003 012 197
- US-A1- 2004 136 368
- US-B1- 6 798 746

## Description

The present invention relates to apparatus for controlling data packet flow.

Methods of balancing load in data networks are known, for example as described in US-A-20040136368.

It is expected that the nature and volume of traffic through data networks, such as the Internet, will change in ways which call for tighter control of traffic to and from end users.

For example, data network access technologies, such as asymmetric digital subscriber line (ADSL), provide ever-greater data rates for delivering content to homes and businesses. Furthermore, some access technologies, such as cable and fibre-to-the-home (FTTH), support not only high downstream data rates, but also equally high upstream rates. This allows users to exchange files through peer-to-peer (P2P) networks.

Moreover, data communication technologies and broadcasting technologies are converging, which permit television programs to be transported through the Internet. At present, these programs tend to be broadcast from a broadcasting station to users. However, in the future, users may wish to broadcast directly to other users.

These changes are expected to increase traffic in networks. Also, existing problems, such as denial of service (DoS) attacks and other forms of malicious traffic, are expected to be harder to address.

WO-A-99/57825 describes a method of controlling the flow of variable-length packets to a multiport switch. The method includes accessing forwarding information in a memory based, at least partially, on layer 4 information from a packet and then forwarding the packet only if the packet is within a bandwidth consumption limit that is specified in the forwarding information. A credit bucket algorithm may be used to ensure that packet flows are within specified bandwidth consumption limits. The credit bucket algorithm may involve receiving a particular packet from a flow and then stripping the layer 2 header information from the packet. The layer 3 and layer 4 information from the packet is then used to look-up flow-specific forwarding and flow control information in a memory that stores a linked list of table entries that includes the fields necessary to implement the credit bucket algorithm.

According to a first aspect of the present invention there is provided a network node for use in a data packet network comprising a line interface for receiving data packets, the line interface comprising processing means and storing means for a forwarding table comprising at least one entry, each entry including information identifying a flow of data packets and information indicating whether to drop data packets in said flow, a flow control module comprising means for storing a table comprising at least one entry, each entry including information identifying a flow of data packets and at least one value of a property of the flow, and processing means adapted, in response to receiving information identifying a data packet, to identify a corresponding flow in the table, to select one of the at least one flow property values, to compare the selected flow property value with a predetermined threshold value of the flow property and to output a message to the line interface instructing control of the corresponding flow of data packets wherein the line interface processing means is adapted, in response to receiving the message, to search the forwarding table to find an entry corresponding to the data packet and, in response to there being no corresponding entry in the forwarding table, to create a new entry in the forwarding table identifying the flow and wherein the line interface is configured, in response to receiving the message, to control the flow of data packets. Thus, the network node can be used control excessive flows and flows which may be potentially malicious.

Each entry may include first and second values of the flow property and the processing means may be adapted to select one of the first and second values. Thus, one value can be updated, while the other value is held ready for comparison with the predetermined threshold value. Each entry may include first status information identifying whether the first flow property value should be used for the comparison with the predetermined threshold value and second status information identifying whether the second flow property value should be used for the comparison with the predetermined threshold value and the processing means may be adapted to select one of the first and second values dependent upon said status information. Each entry may include first and second values of time associated with the first and second flow property values respectively and the processing means may be adapted to select one of the first and second values dependent upon said time values. Thus, the values can be periodically switched such that the side being updated is then used for the comparison, while the side being for the comparison can be cleared and used to collect information about the flow.

Each entry may include a flag for identifying whether the flow property value exceeds the predetermined threshold value. The table may include first and second portions, the first portion of the table stores the first flow property values, first status information and the first time values and the second portion of the table store the second flow property values, the second status information and the second time values. The processing means may be adapted to inspect the first status information so as to determine whether the first flow property value should be used for the comparison and, in dependence upon said first status information, to extract the first time value, to determine an interval of elapsed time using the first time value and a current time value and to compare the elapsed time interval to a first predetermined time interval (T_{d}). The processing means may be adapted, in response to determining that the elapsed time interval exceeds the first predetermined time interval, to compare the elapsed time interval to a second predetermined time interval (Tₘ), the second predetermined time interval being less than the first predetermined time interval. The processing means may be adapted, in response to determining that the elapsed time interval exceeds the second predetermined time interval, to compare the first property value of the flow with the predetermined threshold value. The processing means may be adapted, in response to determining that the first property value exceeds the predetermined threshold value, sets the first flag to indicate that the first property value exceeds the predetermined threshold value. The processing means may be adapted, in response to determining that the first property value exceeds the predetermined threshold value, to send an instruction to at least limit the flow.

The processing means may be adapted, in response to determining that the elapsed time interval does not exceed the first predetermined time interval, to inspect the first status information so as to determine whether to modify the first flow property value and to modify the first property flow value. The processing means may be adapted, in response to determining that the first flow property value should be modified, to compare the elapsed time interval to a second predetermined time interval, the second predetermined time interval being less than the first predetermined time interval. The processing means may be adapted, in response to determining that the elapsed time interval exceeds the second predetermined time interval, to set first status information so as to indicate that first flow property value and first time interval should be cleared and to set the second status information so as to indicate that the second flow property value should be used for the comparison. The processing means may be adapted, in response to determining that the first flow property value should not be modified, to set the first status information so as to indicate that the first flow property value should be modified.

The flow property may be a number of data packets or a number of bytes of data packets.

The processing means may be adapted to calculate an averaged value of the selected flow property value before and to compare the averaged with the predetermined threshold value of the flow property

The network node may be a router.

According to a second aspect of the present invention there is provided a method comprising receiving data packets, providing a table comprising at least one entry, each entry including information identifying a flow of data packets and a value of a property of the flow of data packets, receiving information identifying a data packet, identifying a flow in the table, comparing the flow property value with a predetermined threshold value, outputting a message to control handling of the flow of data packets, providing a forwarding table comprising at least one entry, each entry including information identifying a flow of data packets and information indicating whether to drop data packets in said flow, searching the forwarding table in response to the message to find an entry corresponding to the data packet to determine whether to drop the data packet and, in response to there being no corresponding entry in the forwarding table, creating a new entry in the forwarding table identifying the flow controlling the flow of data packets in response to the message.

The method may comprise providing, for an entry, first and second values of the flow property and selecting one of the first and second values.

According to a third aspect of the present invention there is provided a computer program comprising instructions which, when executed by a data processing apparatus, causes the apparatus to perform the method.

According to a fourth aspect of the present invention there is provided a computer readable medium storing the computer program.

Embodiments of the present invention will now be described, by way of example, with reference to the accompanying drawings in which:
Figure 1 illustrates a system of data networks;
Figure 2 is a schematic block diagram of a network node including a flow control module in accordance with the present invention;
Figure 3 illustrates a format of a message from the line interface to the flow control module shown in Figure 2;
Figure 4 is a schematic block diagram of the flow control module shown in Figure 2;
Figure 5 illustrates a flow information table provided in a processing module;
Figures 6A, 6B and 6C is a flow diagram showing a method of operating the flow control module shown in Figure 2;
Figure 7 illustrates a format of a message from the flow control module to the line interface shown in Figure 2; and
Figure 8 is a schematic block diagram of the line interface module shown in Figure 2;
Figure 9 illustrates a forwarding table provided in a line interface module;
Figure 10 is a flow diagram showing a method of operating a line interface shown in Figure 2.

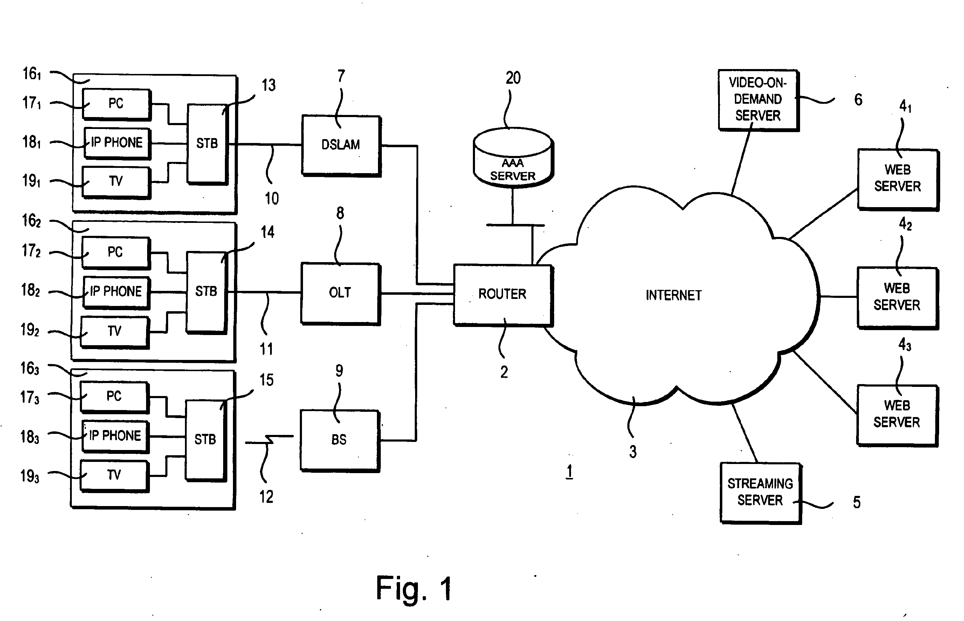

Referring to Figure 1, a system 1 of networks includes a network node 2 in accordance with the present invention. In this example, the network node 2 is an edge router. However, the network node 2 may be core router. Furthermore, the network node 2 need not be router, but may be, for example, a switch.

The network node 2 is connected to a data network 3, such as the Internet, which provides access to services provided by, for example, web severs 4₁, 4₂, 4₃, a streaming sever 5 and a video-on-demand server 6.

The network node 2 is connected to Internet-side connectivity terminators 7, 8, 9 for providing connectivity, via respective physical channels 10, 11, 12, to corresponding customer premises equipment 13, 14, 15 located at user sites 16₁, 16₂, 16₃, such as homes or business premises. For example, the interfaces 7, 8, 9 may include a digital subscriber line access multiplexer (DSLAM) 7, an optical line terminator 8 and a WiMAX (i.e. conforming to IEEE 802.16) base station 9. Other types of connectivity may be used, such as cable modems. Also, only one user site 16₁, 16₂, 16₃ for each type of network access is illustrated for clarity.

Users may access services, via interfaces 13, 14, 15, using their personal computer 17₁, 17₂, 17₃, internet protocol telephone set 18₁, 18₂, 18₃ or Internet-enabled television set 19₁, 19₂, 19₃. The network node 2 may be connected to an authentication, authorization and accounting (AAA) server 20 to authenticate users who access the Internet.

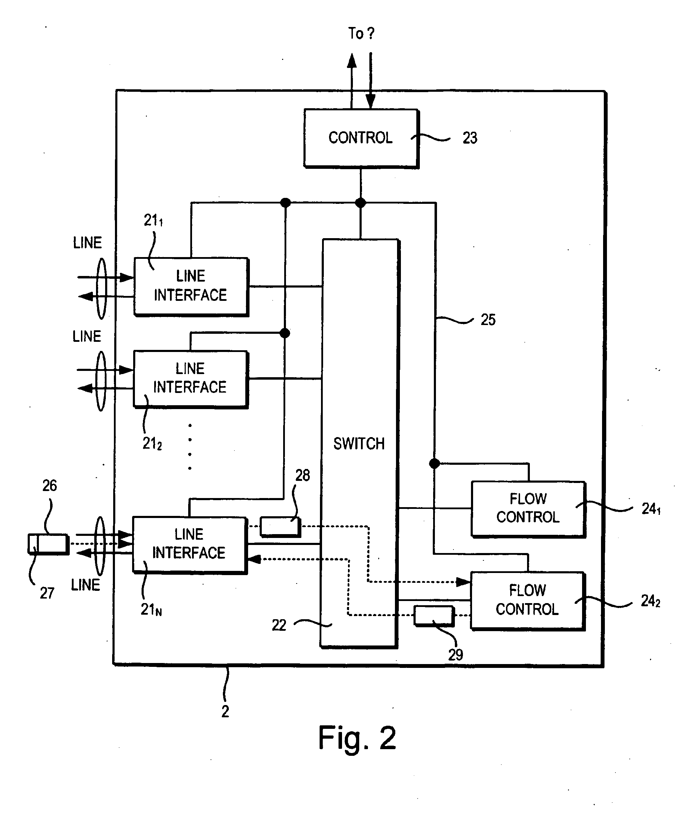

Referring to Figure 2, the network node 2 is shown in more detail.

The network node 2 includes several line interface modules 21₁, 21₂, ..., 21_{N}, a switching module (commonly known as the "switch") 22, a control module 23, at least one flow control module 24₁, 24₂ and an internal bus 25 connecting the line interface modules 21₁, 21₂, ..., 21_{N}, switch 22, control module 23 and the flow control module(s) 24₁, 24₂.

The line interface modules 21₁, 21₂, ..., 21ₙ terminate (Open Systems Interconnection) "layer 1" (also known as the "physical layer") connections, "layer 2" (also known as the "datalink layer") connections, such as Ethernet, and "layer 3" (also known as the "network layer"), such as Internet protocol (IP). The switching module 22 switches packets from one module to another, such as from one line interface modules 21₁, 21₂, ..., 21_{N} to another line interface module 21₁, 21₂, ..., 21_{N}. The control module 23 manages other modules 21₁, 21₂, ..., 21_{N}, 22, 24₁, 24₂ in the network node 2. Each flow control module 24₁, 24₂ collects and analyses information about received and transmitted packets and instructs the line interface module 21₁, 21₂ ,..., 21_{N} to filter packets.

When a line interface module 21₁, 21₂, ..., 21_{N} receives a data packet 26, it decides how to deal with the packet 26, such as whether it should drop or transfer the packet 26. The line interface module 21₁, 21₂, ..., 21_{N} extracts a header 27 from the data packet 26 and sends a message 28 to a flow control module 24₁, 24₂.

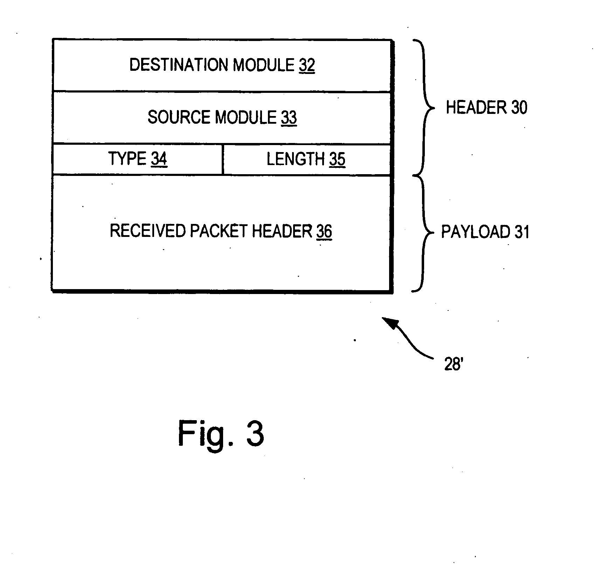

Referring also to Figure 3, a format 28' of the message 28 is shown in more detail.

The message format 28' includes a header 30 and a payload 31. The header 30 includes a destination module field 32, a source module field 33, a received packet type field 34 and a received packet length field 35. The payload 31 includes a header field 36 for storing the received packet header 27. The received packet header may be in the form of a "layer 2" header, such as an Ethernet frame header, and/or the "layer 3" header, such as IP packet header.

As will be explained in more detail later, the flow control module 24₁, 24₂ records information about a flow of data packets, determines, for example, whether the number of packets for the flow exceeds a threshold value and, if so, sends an message 29 to the line interface module 21₁, 21₂, ..., 21_{N} as to how to deal with other data packets coming from the same source and/or going to the same destination. The flow control module 24₁, 24₂ may sends the message 29 to more than one (e.g. all) line interface module(s) 21₁, 21₂, ..., 21_{N}.

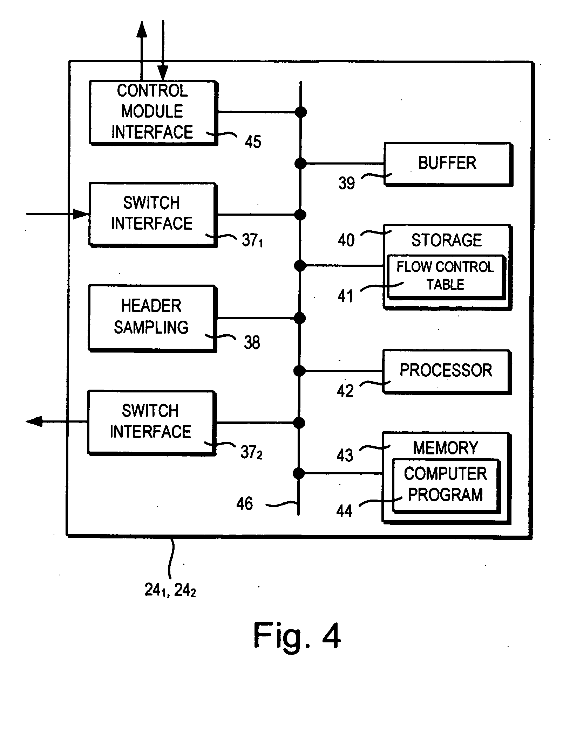

Referring to Figure 4, the flow control module 24₁, 24₂ is shown in more detail.

The flow control module 24₁, 24₂ includes a switch interface 37₁, 37₂, a header-sampling unit 38, a data buffer 39, storage 40 for storing a statistics table 41, a processor 42, memory 43 for storing, among other things, computer programs(s) 44 and an control module interface 45 for communicating with control module 45 (Figure 2). The switch interface 37₁, 37₂, header-sampling unit 38, data buffer 39, storage 40, processor 42, memory 43 and control module interface 45 are interconnected by a bus 46. The computer program 44 which, when executed by the flow control module, causes the flow control module to provide flow control processes is stored in storage (not shown) and loaded into memory 43 for execution by the processor 42.

When flow control module 24₁, 24₂ receives the message 28 (Figure 2), the message 28 (Figure 2) is stored in buffer 39. The header-sampling unit 38 extracts flow information from the header 27 (Figure 2) stored in the received packet header field 36 (Figure 3).

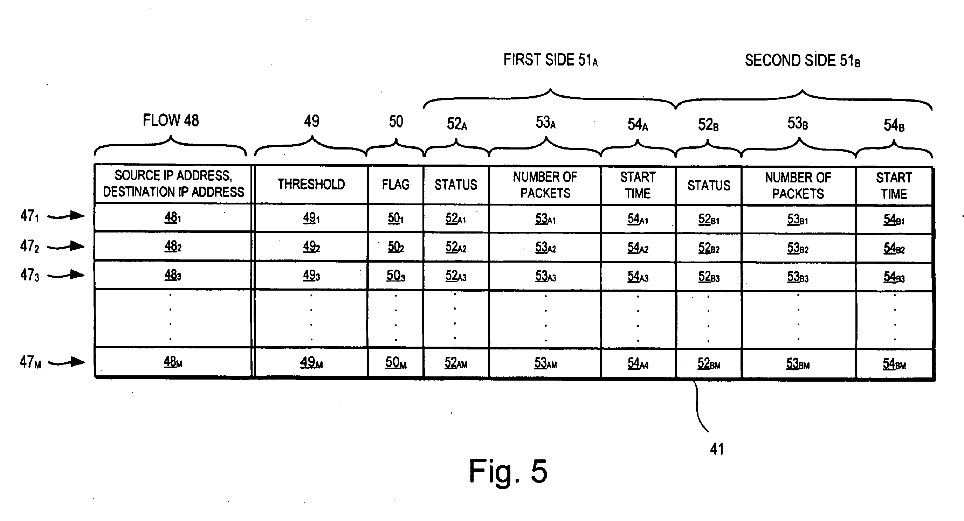

Referring to Figure 5, the flow control table 41 is shown in greater detail.

Each entry 47₁, 47₂, 47₃, ...47_{M} in the table 41 (shown in Figure 5 as a row) includes a respective field 48 for identifying a flow, in this example, using a source IP address and a destination IP address, such as 192.168.10.5, 192.168.20.2. Each entry 47₁, 47₂, 47₃, ...47_{M} also includes a respective property threshold value field 49₁, 49₂, 49₃,...49_{M} and a respective status field 50₁, 50₂, 50₃,... 50_{M}. In this example, the property used is the rate of number of packets received. However, the property can be the rate of data (e.g. in bytes) received. The property can be a protocol number in an IP header or identified with a port number in a TCP (or UDP) header. The threshold value fields 49₁, 49₂, 49₃,...49_{M} may store different threshold values. However, if a threshold value is not defined when an entry is created, then a default value, e.g. Nₜ, may be used.

The flow control table 41 includes first and second portions 51_{A}, 51_{B} (aslo referred to as "side A" and "side B" respectively). Each side 51_{A}, 51_{B} includes, for each entry 47₁, 47₂, 47₃, ...47_{M}, a status field 52_{A1}, 52_{A2}, 52_{A3}, ...,52_{AM}, 52_{B1}, 52_{B2}, 52_{B3}, ...,52_{BM}, a flow property field 53_{A1}, 53_{A2}, 53_{A3}, ...,53_{AM}, 53_{B1}, 53_{B2}, 53_{B3}, ...,53_{BM} and a start time field 54_{A1}, 54_{A2}, 54_{A3}, ...,54_{AM}, 54_{B1}, 54_{B2}, 54_{B3}, ...,54_{BM}. The flow control table 41 may include more than two sides. For each entry 47₁, 47₂, 47₃, ...47_{M}, a single start time field may be used.

Each side 51_{A}, 51_{B} is used alternately to store information about a flow and swap after a predetermined period of time. As will be become clear later, the flows need not concurrently store information on the same side 51_{A}, 51_{B}, in other words one flow may record information on one side of the table, for example on side A (i.e. the first side 51_{A}), and another flow may record information on the other side of the table, for example side B (i.e. the first side 51_{B}).

The status field 52_{A1}, 52_{A2}, 52_{A3}, ...,52_{AM}, 52_{B1}, 52_{B2}, 52_{B3}, ...,52_{BM} is used to indicate one of three conditions of each side 51_{A}, 51_{B} for each entry 47₁, 47₂, 47₃, ...47_{M}, namely whether the side is in ACTIVE, STANDBY or CLEAR state using, for example (binary) codes "00", "01" and "10" respectively.

When a side 51_{A}, 51_{B} is in the ACTIVE state, the value stored in its flow property field 53_{A1}, 53_{A2}, 53_{A3}, ...,53_{AM}, 53_{B1}, 53_{B2} 53_{B3}, ...,53_{BM} is used when comparing the flow property value with the threshold value.

When a side 51_{A}, 51_{B} is in the STANDBY state, its flow property field 53_{A1}, 53_{A2}, 53_{A3}, ...,53_{AM}, 53_{B1}, 53_{B2}, 53_{B3}, ...,53_{BM} is used for accumulating flow information. Thus, each time information about a packet is received, the flow property field 53_{A1}, 53_{A2}, 53_{A3}, ...,53_{AM}, 53_{B1} 53_{B2}, 53_{B3}, ...,53_{BM} is updated.

When a side 51_{A}, 51_{B} is in the CLEAR state, it is not used.

A side 51_{A}, 51_{B} which is in an STANDBY or CLEAR state, it also defined as being in a NON-ACTIVE state.

The start time field 54_{A1}, 54_{A2}, 54_{A3}, ...,54_{AM}, 54_{B1}, 54_{B2}, 54_{B3}, ...,54_{BM} is used to record the time at which the flow property field 53_{A1}, 53_{A2}, 53_{A3}, ...,53_{AM}, 53_{B1,} 53_{B2,} 53_{B3}, ...,53_{BM} begins collecting information. As will be explained later, this field is used to decide whether the sides 51_{A}, 51_{B} change state and, thus, swap roles. In this example, the start time field 54 _{A1}, 54_{A2}, 54_{A3}, ...,54_{AM}, 54_{B1}, 54_{B2}, 54_{B3}, ...,54_{BM} stores a timer value, for example expressed as a number (or integer number) of clock cycles or seconds. However, the start time field 54_{A1}, 54_{A2}, 54_{A3}, ...,54_{AM}, 54_{B1}, 54_{B2}, 54_{B3}, ...,54_{BM} can store a (formatted) clock time, such as Universal Time.

Referring to Figures 4, 5 and 6A to 6C, a method of operating the flow control module 24₁, 24₂ will now be described.

When the flow control module 24₁, 24₂ receives a message 28 (Figure 2), the header-sampling unit 38 checks the received packet header 27 (Figure 2) and identifies a flow (step S1). The processor 42 inspects the flow control table 41 to determine whether any of the entries 47₁, 47₂, 47₃, ...47_{M} corresponds to the flow (step S2).

If the processor 42 does not find a corresponding entry in the table 41, then it creates a new entry corresponding to the flow (for example, last entry 47_{M}) (step S3) and places one side 51_{A}, 51_{B} (e.g. the first side 51_{A}) in an ACTIVE state, while placing the other side (e.g. the second side 51_{B}) in an STANDBY state (step S4). For the side 51_{B} on STANDBY (in this case the second side 51_{B}), the processor 42 stores a start time, t₀, in the start time field, e.g. start time field 54_{BM} (step S5) and updates the flow property value in the flow property value field, e.g. flow property value field 53_{B1}, in this case by adding incrementing the stored value by one, i.e. n= n+1 (step S6). The procedure ends in respect of the received data packet 28 and the flow control module 24₁, 24₂ waits for another message 28 (Figure 2).

If the processor 42 finds an entry corresponding to the flow, for example a first entry 47₁, then it identifies the side 51_{A}, 51_{B} of the table 41 for the entry 47₁ which is in the ACTIVE state (step S7). For the purposes of illustration, it is assumed that the first side 51_{A} is ACTIVE. The processor 42 extracts the start time, t₀, stored in the first time field 51_{A1}, computes an elapsed time, t - t₀, and compares the elapsed time with a first predetermined time interval, T_{d} (step S8).

If the processor 42 determines that elapsed time, t - t₀ does not exceed the first predetermined time interval, T_{d}, then the side currently indicated as being in the ACTIVE state (in this case, the first side 51_{A}) is used for the immediately following steps.

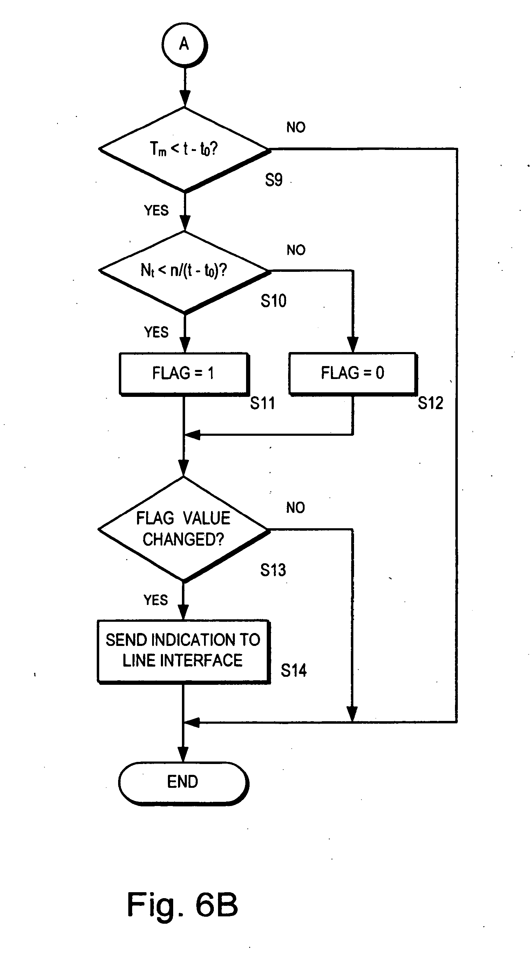

Referring in particular to Figures 4 and 6B, the processor 42 compares the elapsed time with a second predetermined time interval, Tₘ, (which is less than the first predetermined time interval, T_{d}, i.e. Tₘ < T_{d} ) to determine whether a long enough interval has passed for a representative amount of information to be gathered (step S9).

If the processor 42 determines that the elapsed time, t - t₀ exceeds the second predetermined time interval, Tₘ, then the processor 42 extracts a property value (in this example the number of data packets received, n) from the property value field, e.g. property value field 53_{A1}, on the side currently indicated as being in the ACTIVE state, calculates an average value (in this case n/ t - t₀) and compares the average rate to the threshold value, e.g. whether Nₜ < n/ t - t₀ (step S10).

If the processor 42 determines that the average value exceeds the threshold value, then it sets the flag in the status field, e.g. status field 50₁, for the entry to indicate that the threshold value has been exceeded, e.g. by setting the flag to "1" (step S11). Otherwise, if the processor 42 determines that the average value does not exceed the threshold value, then it sets the flag to indicate that the threshold value has not been exceeded, e.g. by setting the flag to "0" (step S12).

The processor 42 determines whether the state of the flag in the status field, e.g. field 50₁, has changed (step S13). If the processor 42 determines that the flag state has changed, then it returns a message 29 (Figure 2) to the line interface module 21₁, 21₂, 21₃, ..., 21_{N} informing it of the change of status. The procedure ends in respect of the received data packet 28 and the flow control module 24₁, 24₂ waits for another message 28 (Figure 2).

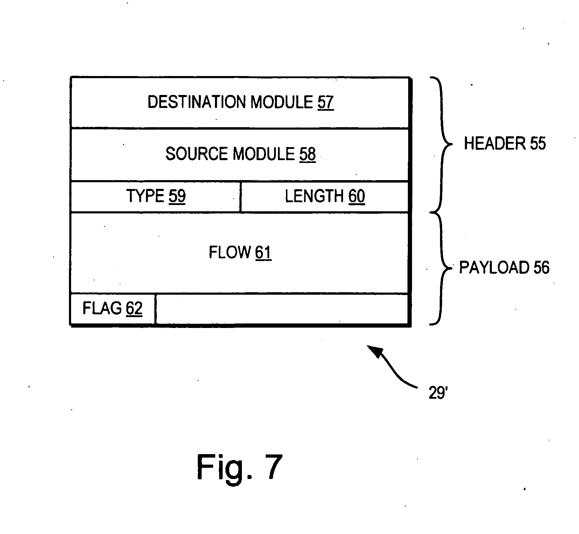

Referring to Figure 7, a format 29' of the message 29 is shown in greater detail.

The message format 29' includes a header 55 and a payload 56. The header 55 includes a destination module field 57, a source module field 58, a received packet type field 59 and a received packet length field 60. The payload 56 includes a flow field 61 for storing the identity of the flow, e.g. first flow 48₁, in this example in the form of the source and destination IP addresses, and a flag field 61 for storing the flag, e.g. corresponding 50₁.

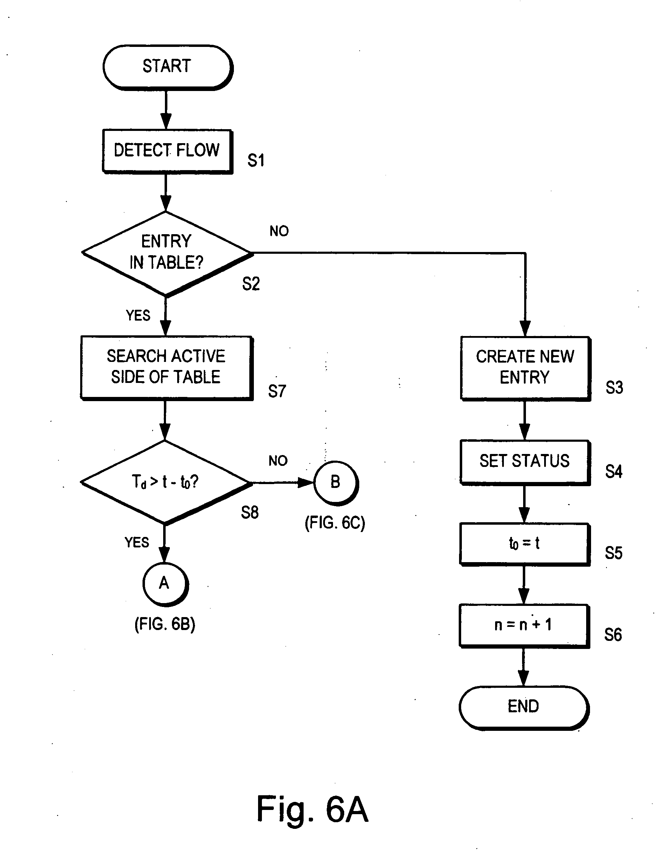

Referring to Figures 4 and 6A, at step S8, if the processor 42 determines that the elapsed time, t - t₀ exceeds the first predetermined time interval, T_{d}, then the side not currently indicated as being ACTIVE (in this case, the second side 51_{A}) is used when performing the following steps.

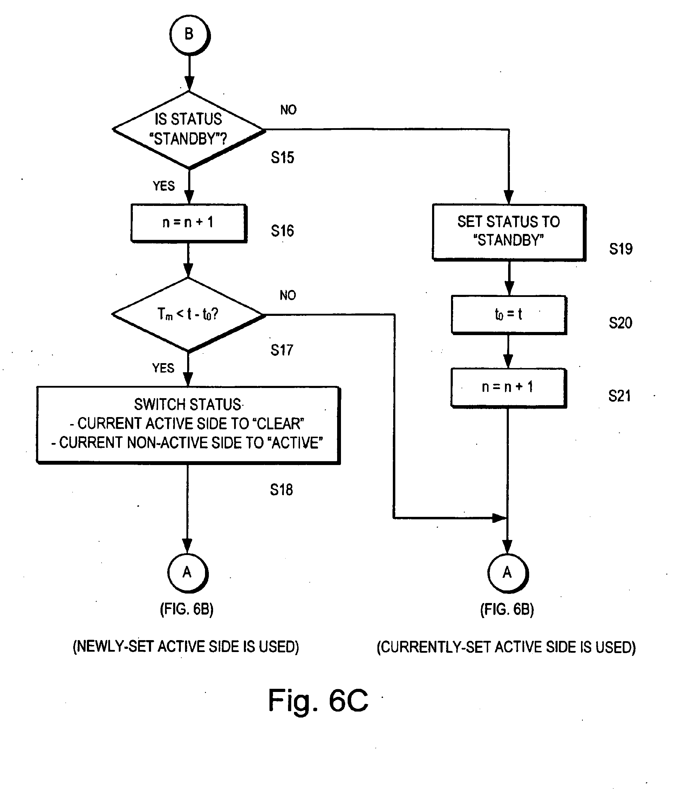

Referring to Figures 4 and 6C, the processor 42 identifies whether the NON-ACTIVE side is in a STANDBY state (step S15).

If the processor 42 identifies that the NON-ACTIVE side is in a STANDBY state, then it updates the value in the flow property field, e.g. flow property field 53_{A1}, in this case by incrementing the stored value by one, i.e. n = n+1 (step S16).

The processor 42 compares the elapsed time with the second predetermined time interval, Tₘ (step S17).

If the processor 42 determines that elapsed time, t - t₀, exceeds the second (longer) predetermined time interval, Tₘ, then the processor 42 clears the property value and start time fields, e.g. property value and start time fields 53_{A1}, 54_{A1}, on the currently ACTIVE side, e.g. first side 50_{A}, 50_{B}, sets the value in the status field, e.g. status field 52_{A}, on the currently ACTIVE side, e.g. first side 50_{A}, to CLEAR and the status field, e.g. second status field 52_{B1}, on the currently NON-ACTIVE side, e.g. second side 51_{B}, to ACTIVE (step S18). Thus, the newly set ACTIVE side (in this example, second side 51_{B}) for the entry is used for comparing the flow property value with the threshold value.

If, at step S17, the processor 42 determines that not enough time has elapsed since starting to accumulate information (i.e. t - t₀ < Tₘ), then the currently ACTIVE side, e.g. the first side 51_{A}, is still used for comparing the flow property value with the threshold value.

If, at step 15, the processor 42 identifies that the NON-ACTIVE side, e.g. second side 51_{B}, is not in the STANDBY state (i.e. in the CLEAR state), then it sets the value in the status field, in this case status field 52_{B1}, on the NON-ACTIVE side to STANDBY (step S19). On the NON-ACTIVE side, in this case the second side 51_{B}, the processor 42 stores a start time, t₀, in the start time field, e.g. start time field 54_{B1} (step S20) and updates the value in the flow property field, e.g. flow property field 53_{B1}, by incrementing the stored value by one, i.e. n = n+1 (step S21).

Once an ACTIVE side for an entry has been set in steps S17 & S18 or left unchanged in step S17 or steps S19 to S21, the processor 42 carries out steps S9 to S14, as described earlier.

Values of the first and second predetermined time intervals, T_{d} and Tₘ, and the threshold value Nₜ may be decided by an operator. For example, the operator may decide that a user broadcasting packets for more than 10 minutes at a rate of approximately 10 Mbit/s may be excessive and lead to network congestion. Thus, values of the first and second predetermined time intervals, T_{d} and Tₘ, may be 60 s and 600 s respectively, and the threshold value Nₜ may be 75000 (packets), assuming a packet is 1 kB.

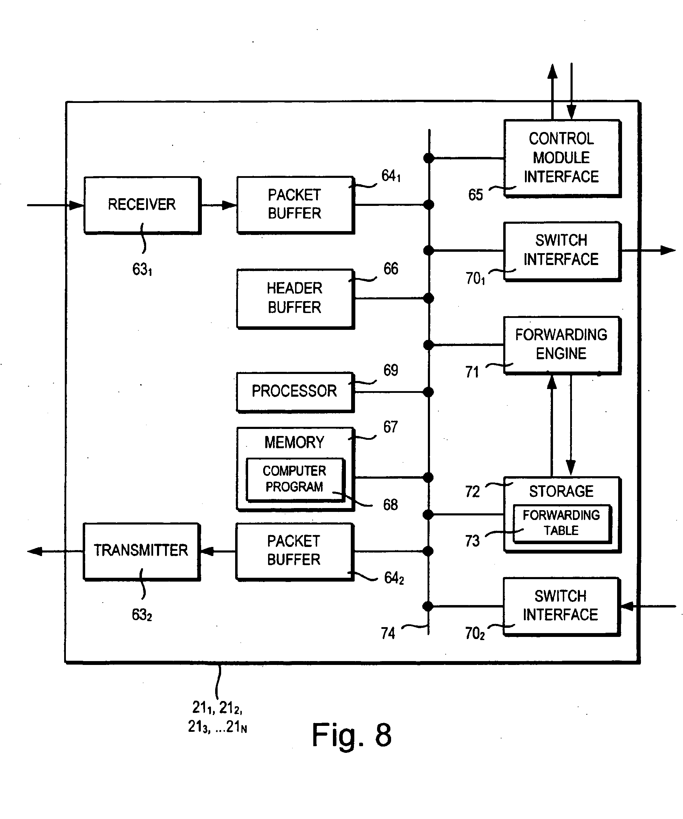

Referring to Figure 8, a line interface module 21₁, 21₂, ..., 21₃, 21_{N} is shown in more detail.

Each line interface module 21₁, 21₂, ..., 21₃, 21_{N} includes a packet receiver 63₁, a received packet buffer 64₁, a packet transmitter 63₂, transmission packet buffer 64₂, a control module interface 65, a processor 66, memory 67 for storing, among other things, computer programs(s) 68, a header buffer 69, a switch interface 70₁, 70₂, a forwarding engine 71 and a storage 72 for storing a forwarding table 73. A bus 74 connects the received packet buffer 64₁, transmission packet buffer 64₂, control module interface 65, processor 66, memory 67, header buffer 69, switch interface 70, forwarding engine 71 and storage 72. The packet receiver 63₁ feed packets into the received packet buffer 64₁ and the transmission packet buffer 64₂ feeds packets into the packet transmitter 63₂.

The packet receiver 63₁ and packet transmitter 63₂ terminate (OSI) "layer 1" and "layer 2" connections for received and transmitted packets respectively. As will be explained in more detail later, when the line interface module 21₁, 21₂, ..., 21₃, 21_{N} receives a packet 26 (Figure 2), the header 27 (Figure 2) of the packet 26 (Figure 2) is stored in the header buffer 69 and the forwarding engine 71 searches the forwarding table 73 to find an output port for the packet 26. The processor 66 prepares the message 29 (Figure 2) using the header 27 (Figure 2) stored in the header buffer 69.

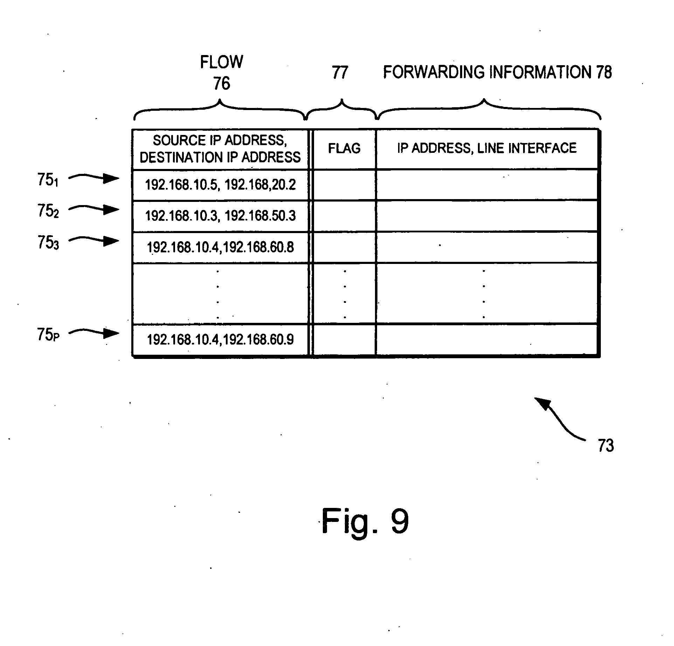

Referring to Figure 9, the forwarding table 73 is shown in further detail.

Each entry 75₁, 75₂, 75₃, ...75_{P} in the table 73 (shown in Figure 5 as a row) includes a respective field 76 for identifying a flow, in this example, using a source IP address and a destination IP address. Each entry 75₁, 75₂, 75₃, ...75_{P} also includes a status field 76 for showing whether the flow exceeds its thresholds and a forwarding information field 77, for example using a next hop IP address and output interface module identifier. The status field 76 is set when an indication message 29 (Figure 2) is received from the flow control module 24₁, 24₂ (Figure 2).

Referring to Figures 8 and 9, the forwarding engine 71 searches the forwarding table 73 to find an entry corresponding to a received packet 26. If the status field 76 is set to indicate (for example by the flag "1") that the packet can be dropped, then the forwarding engine 71 drops the packet 26 stored in the packet buffer 64₁, 64₂. Otherwise, if the status field 76 is set to indicate (for example by the flag "0") that the packet 26 can be forwarded, the forwarding engine 71 transfers the packet 26 in accordance with the information stored in the corresponding forwarding information field 77.

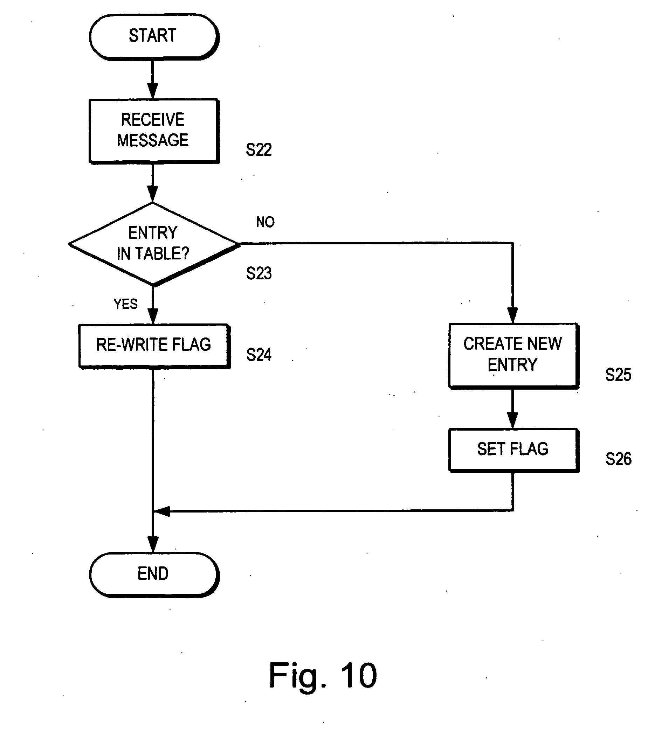

Referring to Figures 8, 9 and 10, a method of operating a line interface module 21₁, 21₂, ..., 21₃, 21_{N} will now be described.

When a message 29 is received from the flow control module 24₁, 24₂ (step S22), the processor 69 inspects the forwarding table 73 to determine whether an entry exists corresponding to the flow (step S23).

If the processor 69 finds an entry 75₁, 75₂, 75₃, ...75_{P} corresponding to the flow, then it re-writes the flag in the status field 76 (step S24).

If the processor 69 does not find a corresponding entry, then it creates a new one in the forwarding table 73 (step S25) and sets the flag in the status field 76 according to the message 29 (step S26).

It will be appreciated that many modifications may be made to the embodiments hereinbefore described. For example, the flow control module may send a message regardless of whether there is a change of state.

## Claims

1. A network node (2) for use in a data packet network, comprising:
a line interface (21₁, 21₂, ...,21_{N}) for receiving data packets, the line interface comprising processing means (69) and storing means (72) for a forwarding table (73) comprising at least one entry (75₁, 75₂, 75₃, ...75ₚ), each entry including information (76) identifying a flow of data packets and information (77) indicating whether to drop data packets in said flow;
a flow control module (24₁, 24₂ ) comprising means (40) for storing a table (41) comprising at least one entry (47₁, 47₂, 47₃,..,47_{M}), each entry including information (48₁, 48₂, 48₃,...,48_{M}) identifying a flow of data packets and at least one value (53_{A1}, 53_{A2}, 53_{A3},.., 53_{AM}, 53_{B1}, 53_{B2}, 53_{B3},..., 53_{BM}) of a property of the flow; and processing means (42) adapted, in response to receiving information (28) identifying a data packet (26), to identify a corresponding flow in the table, to select one of the at least one flow property values for the corresponding flow, to compare the selected flow property value with a predetermined threshold value (49₁, 49₂, 49₃,..., 49_{M}) of the flow property and to output a message (29) to the line interface instructing control of the corresponding flow of data packets,
wherein the line interface processing means (69) is adapted, in response to receiving the message (29), to search the forwarding table (73) to find an entry corresponding to the data packet (26) and, in response to there being no corresponding entry in the forwarding table, to create a new entry (75₁, 75₂, 75₃, ...,75ₚ) in the forwarding table (73) identifying the flow, and
wherein the line interface is configured, in response to receiving the message, to control the flow of data packets.

2. A network node according to claim 1, wherein each entry includes first and second values (53_{A1}, 53_{A2}, 53_{A3},..., 53_{AM}, 53_{B1}, 53_{B2}, 53_{B3},..., 53_{BM}) of the flow property, and the processing means is adapted to select one of the first and second values.

3. A network node according to claim 2, wherein each entry includes first status information (52_{A1}, 52_{A2}, 52_{A3},..., 52_{AM}) identifying whether the first flow property value should be used for the comparison with the predetermined threshold value and second status information (52_{B1}, 52_{B2}, 52_{B3},..., 52_{BM}) identifying whether the second flow property value should be used for the comparison with the predetermined threshold value, and the processing means is adapted to select one of the first and second values dependent upon said status information.

4. A network node according to claim 3, wherein the each entry includes first and second values of time (54_{A1}, 54_{A2}, 54_{A3},..., 54_{AM}, 54_{B1}, 54_{B2}, 54_{B3},..., 54_{BM}) associated with the first and second flow property values (53_{A1}, 53_{A2}, 53_{A3},..., 53_{AM}, 53_{B1}, 53_{B2}, 53_{B3},..., 53_{BM}) respectively, and the processing means is adapted to select one of the first and second values dependent upon said time values.

5. A network node according to claim 4, wherein each entry includes a flag (50₁, 50₂, 50₃,..., 50_{M}) for identifying whether the flow property value exceeds the predetermined threshold value.

6. A network node according to claim 4 or 5, wherein the table includes first and second portions (51_{A}, 51_{B}), the first portion of the table stores the first flow property values, first status information and the first time values and the second portion of the table stores the second flow property values, the second status information and the second time values.

7. A network node according to claim 4, 5 or 6, wherein the processing means is adapted to inspect the first status information so as to determine whether the first flow property value should be used for the comparison and, in dependence upon said first status information, to extract the first time value, to determine an interval of elapsed time using the first time value and a current time value and to compare the elapsed time interval to a first predetermined time interval (T_{d}).

8. A network node according to claim 7, wherein the processing means is adapted, in response to determining that the elapsed time interval exceeds the first predetermined time interval, to compare the elapsed time interval to a second predetermined time interval (Tₘ), the second predetermined time interval being less than the first predetermined time interval.

9. A network node according to claim 8, wherein the processing means is adapted, in response to determining that the elapsed time interval exceeds the second predetermined time interval, to compare the first property value of the flow with the predetermined threshold value.

10. A network node according to claim 9, wherein the processing means is adapted, in response to determining that the first property value exceeds the predetermined threshold value, sets the first flag to indicate that the first property value exceeds the predetermined threshold value.

11. A network node according to claim 9 or 10, wherein the processing means is adapted, in response to determining that the first property value exceeds the predetermined threshold value, to send an instruction to at least limit the flow.

12. A network node according to any one of claims 6 to 11, wherein the processing means is adapted, in response to determining that the elapsed time interval does not exceed the first predetermined time interval, to inspect the first status information so as to determine whether to modify the first flow property value and to modify the first property flow value.

13. A network node according to claim 12, wherein the processing means is adapted, in response to determining that the first flow property value should be modified, to compare the elapsed time interval to a second predetermined time interval, the second predetermined time interval being less than the first predetermined time interval.

14. A network node according to claim 13, wherein the processing means is adapted, in response to determining that the elapsed time interval exceeds the second predetermined time interval, to set first status information so as to indicate that first flow property value and first time interval should be cleared and to set the second status information so as to indicate that the second flow property value should be used for the comparison.

15. A network node according to claim 12 to 14, wherein the processing means is adapted, in response to determining that the first flow property value should not be modified, to set the first status information so as to indicate that the first flow property value should be modified.

16. A network node according to any one of claims 1 to 15, wherein the flow property is number of data packets.

17. A network node according to any one of claims 1 to 15, wherein the flow property is number of bytes of data packets.

18. A network node according to any preceding claim, wherein the processing means is adapted to calculate an averaged value of the selected flow property value before and to compare the averaged with the predetermined threshold value of the flow property

19. A network node according to any preceding claim, which is a router.

20. A method comprising:
receiving data packets; providing a table (41) comprising at least one entry (47₁,47₂, 47₃,...,47_{M}), each entry including information (48₁, 48₂, 48₃,...,48_{M}) identifying a flow of data packets and a value of a property of the flow of data packets; receiving information identifying a data packet;
identifying a flow in the table (41);
comparing the flow property value with a predetermined threshold value;
outputting a message (29) to control handling of the flow of data packets;
providing a forwarding table (73) comprising at least one entry (75₁, 75₂, 75₃, ...75ₚ), each entry including information (76) identifying a flow of data packets and information (77) indicating whether to drop data packets in said flow;
searching the forwarding table (73) in response to the message (29) to find an entry corresponding to the data packet to determine whether to drop the data packet and, in response to there being no corresponding entry in the forwarding table, creating a new entry (75₁, 75₂, 75₃, ...,75ₚ) in the forwarding table identifying the flow; and
controlling the flow of data packets in response to the message.

21. A method according to claim 20, comprising:
providing, for an entry, first and second values of the flow property; and
selecting one of the first and second values.

22. A computer program comprising instructions which, when executed by a data processing apparatus, causes the apparatus to perform a method according to claim 20 or 21.

23. A computer readable medium storing a computer program according to claim 22.

## Patentansprüche

1. Netzwerkknoten (2) zur Verwendung in einem Datenpaketnetzwerk, umfassend:
eine Leitungsschnittstelle (21₁, 21₂, ..., 21_{N}) zum Empfangen von Datenpaketen, wobei die Leitungsschnittstelle ein Verarbeitungsmittel (69) und ein Speichermittel (72) für eine Weiterleitungstabelle (73) umfasst, die wenigstens einen Eintrag (75₁, 75₂, 75₃, ..., 75ₚ) umfasst, wobei jeder Eintrag eine Information (76), die einen Fluss von Datenpaketen kennzeichnet, und eine Information (77) enthält, die anzeigt, ob Datenpakete in dem Fluss zu verwerfen sind;
ein Flusssteuerungsmodul (24₁, 24₂), das ein Mittel (40) zum Speichern einer Tabelle (41), die wenigstens einen Eintrag (47₁, 47₂, 47₃, ..., 47_{M}) umfasst,
wobei jeder Eintrag eine Information (48₁, 48₂, 48₃, ..., 48_{M}), die einen Fluss von Datenpaketen kennzeichnet, und wenigstens einen Wert (53_{A1}, 53_{A2}, 53_{A3}, ..., 53_{AM,} 53_{B1}, 53_{B2}, 53_{B3}, ..., 53_{BM}) von einer Eigenschaft des Flusses enthält; und ein Verarbeitungsmittel (42) umfasst, das dazu ausgelegt ist, als Antwort auf das Empfangen von Information (28), die ein Datenpaket (26) kennzeichnet, einen entsprechenden Fluss in der Tabelle zu identifizieren, einen von den wenigstens einen Flusseigenschaftswerten für den entsprechenden Fluss auszuwählen, den ausgewählten Flusseigenschaftswert mit einem vorbestimmten Schwellwert (49₁, 49₂, 49₃, ..., 49_{M}) der Flusseigenschaft zu vergleichen und eine Nachricht (29) an die Leitungsschnittstelle auszugeben, die eine Steuerung des entsprechenden Flusses von Datenpaketen anweist,
wobei das Leitungsschnittstellen-Verarbeitungsmittel (69) dazu ausgelegt ist, als Antwort auf das Empfangen der Nachricht (29) die Weiterleitungstabelle (73) zu durchsuchen, um einen dem Datenpaket (26) entsprechenden Eintrag aufzufinden und als Antwort darauf, dass kein entsprechender Eintrag in der Weiterleitungstabelle vorhanden ist, einen neuen Eintrag (75₁, 75₂, 75₃, ..., 75ₚ) in der Weiterleitungstabelle (73) zu erzeugen, der den Fluss kennzeichnet, und
wobei die Leitungsschnittstelle dazu eingerichtet ist, als Antwort auf das Empfangen der Nachricht den Fluss von Datenpaketen zu steuern.

2. Netzwerkknoten nach Anspruch 1, wobei jeder Eintrag erste und zweite Werte (53_{A1}, 53_{A2}, 53_{A3}, ..., 53_{AM}, 53_{B}, 53_{B2}, 53_{B3}, ..., 53_{BM}) der Flusseigenschaft enthält und wobei das Verarbeitungsmittel dazu ausgelegt ist, einen von den ersten und zweiten Werten auszuwählen.

3. Netzwerkknoten nach Anspruch 2, wobei jeder Eintrag eine erste Statusinformation (52_{A1}, 52_{A2}, 52_{A3}, ..., 52_{AM}), die kennzeichnet, ob der erste Flusseigenschaftswert für den Vergleich mit dem vorbestimmten Schwellwert verwendet werden soll, und eine zweite Statusinformation (52_{B1}, 52_{B2}, 52_{B3}, ..., 52_{BM}) enthält, die kennzeichnet, ob der zweite Flusseigenschaftswert für den Vergleich mit dem vorbestimmten Schwellwert verwendet werden soll, und wobei das Verarbeitungsmittel dazu ausgelegt ist, abhängig von der Statusinformation einen von den ersten und zweiten Werten auszuwählen.

4. Netzwerkknoten nach Anspruch 3, wobei jeder Wert erste und zweite Zeitwerte (54_{A1}, 54_{A2}, 54_{A3}, ..., 54_{AM}, 54_{B1}, 54_{B2}, 54_{B3}, ..., 54_{BM}) enthält, die den ersten bzw. zweiten Flusseigenschaftswerten (53_{A1}, 53_{A2}, 53_{A3}, ..., 53A_{M,} 53_{B1}, 53_{B2}, 53_{B3}, ..., 53_{BM}) zugeordnet sind, und wobei das Verarbeitungsmittel dazu ausgelegt ist, abhängig von den Zeitwerten einen von den ersten und zweiten Werten auszuwählen.

5. Netzwerkknoten nach Anspruch 4, wobei jeder Eintrag ein Flag (50₁, 50₂, 50₃, ..., 50_{M}) zum Kennzeichnen enthält, ob der Flusseigenschaftswert den vorbestimmten Schwellwert übersteigt.

6. Netzwerkknoten nach Anspruch 4 oder 5, wobei die Tabelle einen ersten und einen zweiten Bereich (51_{A}, 51_{B}) enthält, wobei der erste Bereich der Tabelle die ersten Flusseigenschaftswerte, die erste Statusinformation und die ersten Zeitwerte speichert und der zweite Bereich der Tabelle die zweiten Flusseigenschaftswerte, die zweite Statusinformation und die zweiten Zeitwerte speichert.

7. Netzwerkknoten nach Anspruch 4, 5 oder 6, wobei das Verarbeitungsmittel dazu ausgelegt ist, die erste Statusinformation so zu überprüfen, dass bestimmt wird, ob der erste Flusseigenschaftswert für den Vergleich verwendet werden soll, und in Abhängigkeit von der ersten Statusinformation den ersten Zeitwert zu extrahieren, ein Intervall der abgelaufenen Zeit unter Verwendung des ersten Zeitwertes und eines momentanen Zeitwertes zu bestimmen und das Intervall der abgelaufenen Zeit mit einem ersten vorbestimmten Zeitintervall (T_{d}) zu vergleichen.

8. Netzwerkknoten nach Anspruch 7, wobei das Verarbeitungsmittel dazu ausgelegt ist, als Antwort auf das Bestimmen, dass das Intervall der abgelaufenen Zeit das erste vorbestimmte Zeitintervall übersteigt, das Intervall der abgelaufenen Zeit mit einem zweiten vorbestimmten Zeitintervall (Tₘ) zu vergleichen, wobei das zweite vorbestimmte Zeitintervall kürzer als das erste vorbestimmte Zeitintervall ist.

9. Netzwerkknoten nach Anspruch 8, wobei das Verarbeitungsmittel dazu ausgelegt ist, als Antwort auf das Bestimmen, dass das Intervall der abgelaufenen Zeit das zweite vorbestimmte Zeitintervall übersteigt, den ersten Eigenschaftswert des Flusses mit dem vorbestimmten Schwellwert zu vergleichen.

10. Netzwerkknoten nach Anspruch 9, wobei das Verarbeitungsmittel dazu ausgelegt ist, als Antwort auf das Bestimmen, dass der erste Eigenschaftswert den vorbestimmten Schwellwert übersteigt, das erste Flag derart einzustellen, dass es kennzeichnet, dass der erste Eigenschaftswert den vorbestimmten Schwellwert übersteigt.

11. Netzwerkknoten nach Anspruch 9 oder 10, wobei das Verarbeitungsmittel dazu ausgelegt ist, als Antwort auf das Bestimmen, dass der erste Eigenschaftswert den vorbestimmten Schwellwert übersteigt, eine Anweisung dazu zu senden, dass wenigstens der Fluss begrenzt wird.

12. Netzwerkknoten nach einem der Ansprüche 6 bis 11, wobei das Verarbeitungsmittel dazu ausgelegt ist, als Antwort auf das Bestimmen, dass das Intervall der abgelaufenen Zeit das erste vorbestimmte Zeitintervall nicht übersteigt, die erste Statusinformation so zu überprüfen, dass bestimmt wird, ob der erste Flusseigenschaftswert zu modifizieren ist, und den ersten Flusseigenschaftswert zu modifizieren.

13. Netzwerkknoten nach Anspruch 12, wobei das Verarbeitungsmittel dazu ausgelegt ist, als Antwort auf das Bestimmen, dass der erste Flusseigenschaftswert modifiziert werden soll, das Intervall der abgelaufenen Zeit mit einem zweiten vorbestimmten Zeitintervall zu vergleichen, wobei das zweite vorbestimmte Zeitintervall kürzer als das erste vorbestimmte Zeitintervall ist.

14. Netzwerkknoten nach Anspruch 13, wobei das Verarbeitungsmittel dazu ausgelegt ist, als Antwort auf das Bestimmen, dass das Intervall der abgelaufenen Zeit das zweite vorbestimmte Zeitintervall übersteigt, die erste Statusinformation so einzustellen, dass sie kennzeichnet, dass der erste Flusseigenschaftswert und das erste Zeitintervall gelöscht werden sollen, und die zweite Statusinformation so einzustellen, dass sie kennzeichnet, dass der zweite Flusseigenschaftswert für den Vergleich verwendet werden soll.

15. Netzwerkknoten nach Anspruch 12 bis 14, wobei das Verarbeitungsmittel dazu ausgelegt ist, als Antwort auf das Bestimmen, dass der erste Flusseigenschaftswert nicht modifiziert werden soll, die erste Statusinformation so einzustellen, dass sie kennzeichnet, dass der erste Flusseigenschaftswert modifiziert werden soll.

16. Netzwerkknoten nach einem der Ansprüche 1 bis 15, wobei die Flusseigenschaft eine Anzahl von Datenpaketen ist.

17. Netzwerkknoten nach einem der Ansprüche 1 bis 15, wobei die Flusseigenschaft eine Anzahl von Bytes der Datenpakete ist.

18. Netzwerkknoten nach einem der vorhergehenden Ansprüche, wobei das Verarbeitungsmittel dazu ausgelegt ist, einen gemittelten Wert des ausgewählten Flusseigenschaftswertes vorab zu berechnen und den gemittelten Wert mit dem vorbestimmten Schwellwert der Flusseigenschaft zu vergleichen.

19. Netzwerkknoten nach einem der vorhergehenden Ansprüche, welcher ein Router ist.

20. Verfahren, umfassend:
Empfangen von Datenpaketen;
Bereitstellen einer Tabelle (41), die wenigstens einen Eintrag (47₁, 47₂, 47₃, ..., 47_{M}) umfasst, wobei jeder Eintrag eine Information (48₁, 48₂, 48₃, ..., 48_{M}), die einen Fluss von Datenpaketen kennzeichnet, und einen Wert einer Eigenschaft des Flusses von Datenpaketen enthält;
Empfangen von Information, die ein Datenpaket kennzeichnet;
Identifizieren eines Flusses in der Tabelle (41);
Vergleichen des Flusseigenschaftswertes mit einem vorbestimmten Schwellwert;
Ausgeben einer Nachricht (29), um das Behandeln des Flusses von Datenpaketen zu steuern;
Bereitstellen einer Weiterleitungstabelle (73), die wenigstens einen Eintrag (75₁, 75₂, 75₃, ..., 75ₚ) umfasst, wobei jeder Eintrag eine Information (76), die einen Fluss von Datenpaketen kennzeichnet, und eine Information (77) enthält, die kennzeichnet, ob Datenpakete in dem Fluss zu verwerfen sind;
Durchsuchen der Weiterleitungstabelle (73) als Antwort auf die Nachricht (29), um einen dem Datenpaket entsprechenden Eintrag aufzufinden, um zu bestimmen, ob das Datenpaket zu verwerfen ist, und als Antwort darauf, dass kein entsprechender Eintrag in der Weiterleitungstabelle vorhanden ist, Erzeugen eines neuen Eintrages (75₁, 75₂, 75₃, ..., 75ₚ) in der Weiterleitungstabelle, der den Fluss kennzeichnet; und
Steuern des Flusses von Datenpaketen als Antwort auf die Nachricht.

21. Verfahren nach Anspruch 20, umfassend:
Bereitstellen von ersten und zweiten Werten der Flusseigenschaft für einen Eintrag; und
Auswählen von einem der ersten und zweiten Werte.

22. Computerprogramm, umfassend Anweisungen, welche, wenn sie durch eine Datenverarbeitungsvorrichtung ausgeführt werden, dazu führen, dass die Vorrichtung ein Verfahren nach Anspruch 20 oder 21 ausführt.

23. Computerlesbares Medium, das ein Computerprogramm nach Anspruch 22 speichert.

## Revendications

1. Noeud (2) de réseau pour utilisation dans un réseau à commutation de paquets de données, comprenant :
une interface (21₁, 21₂, ..., 21_{N}) de ligne destinée à recevoir des paquets de données, l'interface de ligne comprenant un moyen (69) de traitement et un moyen (72) de mémorisation pour une table (73) d'acheminement comprenant au moins une entrée (75₁, 75₂, 75₃, ..., 75ₚ), chaque entrée incluant de l'information (76) identifiant un flux de paquets de données et de l'information (77) indiquant si l'on doit ignorer des paquets de données dudit flux ;
un module (24₁, 24₂) de commande de flux comprenant un moyen (40) destiné à mémoriser une table (41) comprenant au moins une entrée (47₁, 47₂, 47₃, ..., 47_{M}), chaque entrée incluant de l'information (48₁, 48₂, 48₃, ..., 48_{M}) identifiant un flux de paquets de données et au moins une valeur (53_{A1}, 53_{A2}, 53_{A3},..., 53_{AM}, 53_{B1}, 53_{B2}, 53_{B3}, ..., 53_{BM}) d'une propriété du flux ; et un moyen (42) de traitement apte, en réponse à la réception d'une information (28) identifiant un paquet (26) de données, à identifier un flux correspondant dans la table, à choisir l'une des au moins une valeurs de propriété de flux pour le flux correspondant, à comparer la valeur de propriété de flux choisie avec une valeur prédéterminée (49₁, 49₂, 49₃,..., 49_{M}) de seuil de la propriété de flux et à sortir un message (29) vers l'interface de ligne ordonnant la commande du flux correspondant de paquets de données,
dans lequel le moyen (69) de traitement d'interface de ligne est apte, en réponse à la réception du message (29), à rechercher dans la table (73) d'acheminement pour trouver une entrée correspondant au paquet (26) de données et, en réponse à ce qu'il n'y a pas d'entrée correspondante dans la table d'acheminement, à créer dans la table (73) d'acheminement une nouvelle entrée (75₁, 75₂, 75₃, ..., 75ₚ) identifiant le flux, et
dans lequel l'interface de ligne est constituée, en réponse à la réception du message, pour commander le flux de paquets de données.

2. Noeud de réseau selon la revendication 1, dans lequel chaque entrée inclut des premières et secondes valeurs (53_{A1}, 53_{A2}, 53_{A3}, ..., 53_{AM}, 53_{B1}, 53_{B2}, 53_{B3}, ..., 53_{BM}) de la propriété de flux, et dans lequel le moyen de traitement est apte à choisir l'une des premières et secondes valeurs.

3. Noeud de réseau selon la revendication 2, dans lequel chaque entrée inclut une première information (52_{A1}, 52_{A2}, 52_{A3}, ..., 52_{AM}) d'état identifiant si la première valeur de propriété de flux doit être utilisée pour la comparaison avec la valeur prédéterminée de seuil et une seconde information (52_{B1}, 52_{B2}, 52_{B3}, ..., 52_{BM}) d'état identifiant si la seconde valeur de propriété de flux doit être utilisée pour la comparaison avec la valeur prédéterminée de seuil, et dans lequel le moyen de traitement est apte à choisir l'une des première et seconde valeurs en fonction de ladite information d'état.

4. Noeud de réseau selon la revendication 3, dans lequel chaque entrée inclut des premières et secondes valeurs (54_{A1}, 54_{A2}, 54_{A3}, ..., 54_{AM}, 54_{B1}, 54_{B2}, 54_{B3}, ..., 54_{BM}) de temps associées respectivement aux premières et secondes valeurs (53_{A1}, 53_{A2}, 53_{A3}, ..., 53_{AM}, 53_{B1}, 53_{B2}, 53_{B3},..., 53_{BM}) de propriété de flux, et dans lequel le moyen de traitement est apte à choisir l'une des premières et secondes valeurs en fonction desdites valeurs de temps.

5. Noeud de réseau selon la revendication 4, dans lequel chaque entrée inclut un indicateur (50₁, 50₂, 50₃,..., 50_{M}) destiné à identifier si la valeur de propriété de flux excède la valeur prédéterminée de seuil.

6. Noeud de réseau selon la revendication 4 ou 5, dans lequel la table inclut des première et seconde parties (51_{A}, 51_{B}), la première partie de la table mémorisant les premières valeurs de propriété de flux, la première information d'état et les premières valeurs de temps et la seconde partie de la table mémorisant les secondes valeurs de propriété de flux, la seconde information d'état et les secondes valeurs de temps.

7. Noeud de réseau selon la revendication 4, 5 ou 6, dans lequel le moyen de traitement est apte à examiner la première information d'état de façon à déterminer si la première valeur de propriété de flux doit être utilisée pour la comparaison et, en fonction de ladite première information d'état, à extraire la première valeur de temps, à déterminer un intervalle de temps écoulé en utilisant la première valeur de temps et une valeur actuelle de temps et à comparer l'intervalle de temps écoulé à un premier intervalle prédéterminé (T_{d}) de temps.

8. Noeud de réseau selon la revendication 7, dans lequel le moyen de traitement est apte, en réponse à la détermination que l'intervalle de temps écoulé excède le premier intervalle prédéterminé de temps, à comparer l'intervalle de temps écoulé à un second intervalle prédéterminé (Tₘ) de temps, le second intervalle prédéterminé de temps étant plus petit que le premier intervalle prédéterminé de temps.

9. Noeud de réseau selon la revendication 8, dans lequel le moyen de traitement est apte, en réponse à la détermination que l'intervalle de temps écoulé excède le second intervalle prédéterminé de temps, à comparer la première valeur de propriété du flux avec la valeur prédéterminée de seuil.

10. Noeud de réseau selon la revendication 9, dans lequel le moyen de traitement est apte, en réponse à la détermination que la première valeur de propriété excède la valeur prédéterminée de seuil, à activer le premier indicateur pour indiquer que la première valeur de propriété excède la valeur prédéterminée de seuil.

11. Noeud de réseau selon la revendication 9 ou 10, dans lequel le moyen de traitement est apte, en réponse à la détermination que la première valeur de propriété excède la valeur prédéterminée de seuil, à envoyer une instruction pour au moins limiter le flux.

12. Noeud de réseau selon l'une quelconque des revendications 6 à 11, dans lequel le moyen de traitement est apte, en réponse à la détermination que l'intervalle de temps écoulé n'excède pas le premier intervalle prédéterminé de temps, à examiner la première information d'état de façon à déterminer si l'on doit modifier la première valeur de propriété de flux et à modifier la première valeur de propriété de flux.

13. Noeud de réseau selon la revendication 12, dans lequel le moyen de traitement est apte, en réponse à la détermination que la première valeur de propriété de flux doit être modifiée, à comparer l'intervalle de temps écoulé à un second intervalle prédéterminé de temps, le second intervalle prédéterminé de temps étant plus petit que le premier intervalle prédéterminé de temps.

14. Noeud de réseau selon la revendication 13, dans lequel le moyen de traitement est apte, en réponse à la détermination que l'intervalle de temps écoulé excède le second intervalle prédéterminé de temps, à établir la première information d'état de façon à indiquer que la première valeur de propriété de flux et le premier intervalle de temps doivent être effacés et à établir la seconde information d'état de façon à indiquer que la seconde valeur de propriété de flux doit être utilisée pour la comparaison.

15. Noeud de réseau selon les revendications 12 à 14, dans lequel le moyen de traitement est apte, en réponse à la détermination que la première valeur de propriété de flux ne doit pas être modifiée, à établir la première information d'état de façon à indiquer que la première valeur de propriété de flux doit être modifiée.

16. Noeud de réseau selon l'une quelconque des revendications 1 à 15, dans lequel la propriété de flux est un nombre de paquets de données.

17. Noeud de réseau selon l'une quelconque des revendications 1 à 15, dans lequel la propriété de flux est un nombre d'octets des paquets de données.

18. Noeud de réseau selon l'une quelconque des revendications précédentes, dans lequel le moyen de traitement est apte à calculer une valeur moyenne de la valeur de propriété de flux choisie avant et à comparer la moyenne avec la valeur prédéterminée de seuil de la propriété de flux.

19. Noeud de réseau selon l'une quelconque des revendications précédentes, qui est un routeur.

20. Procédé comprenant :
la réception de paquets de données ;
la fourniture d'une table (41) comprenant au moins une entrée (47₁, 47₂, 47₃, ..., 47_{M}), chaque entrée incluant de l'information (48₁, 48₂, 48₃, ..., 48_{M}) identifiant un flux de paquets de données et une valeur d'une propriété du flux de paquets de données ;
la réception d'une information identifiant un paquet de données ;
l'identification d'un flux dans la table (41) ;
la comparaison de la valeur de propriété de flux avec une valeur prédéterminée de seuil ;
la sortie d'un message (29) pour commander la manipulation du flux de paquets de données ;
la fourniture d'une table (73) d'acheminement comprenant au moins une entrée (75₁, 75₂, 75₃, ..., 75ₚ), chaque entrée incluant de l'information (76) identifiant un flux de paquets de données et de l'information (77) indiquant si l'on doit ignorer des paquets de données dudit flux ;
la recherche dans la table (73) d'acheminement en réponse au message (29) pour trouver une entrée correspondant au paquet de données pour déterminer si l'on doit ignorer le paquet de données et, en réponse à ce qu'il n'y a pas d'entrée correspondante dans la table d'acheminement, à créer dans la table d'acheminement une nouvelle entrée (75₁, 75₂, 75₃, ..., 75ₚ) identifiant le flux ; et
la commande du flux de paquets de données en réponse au message.

21. Procédé selon la revendication 20, comprenant :
la fourniture, pour une entrée, de première et seconde valeurs de la propriété de flux ; et
le choix de l'une des première et seconde valeurs.

22. Programme d'ordinateur comprenant des instructions qui, lorsqu'elles sont exécutées par un appareil de traitement de données, font que l'appareil met en oeuvre le procédé selon la revendication 20 ou 21.

23. Support lisible par ordinateur mémorisant un programme d'ordinateur selon la revendication 22.
